Europäisches Patentamt

European Patent Office

Office européen des brevets

(11) Publication number: **0 160 002**
**B1**

# EUROPEAN PATENT SPECIFICATION

(45) Date of publication of patent specification: **21.02.90**

(21) Application number: **84903222.2**

(22) Date of filing: **09.08.84**

(86) International application number:
**PCT/US84/01260**

(87) International publication number:
**WO 85/01680 25.04.85 Gazette 85/10**

(51) Int. Cl.⁵: **B 21 D 39/00, B 21 D 53/08,
B 23 P 15/26, F 28 F 9/16**

(54) A METHOD OF AFFIXING TUBES TO HEADERS IN A HEAT EXCHANGER.

(30) Priority: **19.10.83 US 543324**

(43) Date of publication of application:
**06.11.85 Bulletin 85/45**

(45) Publication of the grant of the patent:
**21.02.90 Bulletin 90/08**

(84) Designated Contracting States:
**BE DE FR GB SE**

(56) References cited:
**EP-A-0 026 434
DE-A- 435 501
DE-A-2 810 274
GB-A-1 232 414
JP-A-57 032 838
US-A-2 105 405
US-A-2 226 243
US-A-2 649 127
US-A-3 349 465
US-A-3 608 173
US-A-3 857 151
US-A-4 159 034
US-A-4 377 024
US-A-4 458 749**

**No relevant documents have been disclosed**

(73) Proprietor: **THE ALLEN GROUP, INC.**
**100 Gando Drive
New Haven, CT 06508 (US)**

(72) Inventor: **CALLESON, Gerald, C.**
**146 Flintlock Drive
Madison, CT 06443 (US)**

(74) Representative: **Massari, Marcello
Studio M. Massari S.r.l. 23, Via Fontanella
Borghese
I-00186 Roma (IT)**

Courier Press, Leamington Spa, England.

## Description

This invention relates to heat exchangers and more particularly to automotive heat exchangers and radiators and to a method of making the same as disclosed in US—A—4 159 034.

In heat exchangers such as automotive radiators, which consist of top and bottom headers with tubes attached to them and fins attached to the tubes, there is often a failure of the bond between the tubes and headers before there is a failure of the material from which the headers and tubes are made. This is usually a result of high tensile and shear stresses created from thermal expansions and contractions coupled with operational vibrations which cause the bonding material affixing the tubes to the headers to crack and fail.

A contributing factor to this failure is that most tubes in such heat exchangers are oval shaped and are joined to the headers by inserting the ends of the oval shaped tubes into oval shaped collared openings in the walls of the headers. These oval shaped tubes and the oval shaped openings do not allow for a particularly tight fit, and make it difficult to obtain a good weld. They also contribute to bonding material failure because of uneven stress distribution.

Another contributing factor to the failure of the bonding material is the corrosion of the same due to exposure to engine coolants.

In the prior art there are taught methods of forming flanged or collared openings such as in US—A—4,373,369.

The forming of the collared openings comprises punching openings into the header wall to form, from the material of the header wall, collars which project inwardly from the outer to the inner surface of the header wall. The bonding comprises welding the tube ends to the collars at the inner surface of the header wall, and/or applying a bonding material to the junction of the outer surface of the header wall and the tubes. The bonding material can be solder or brazing material or a plastic structural adhesive. The bonding material can be applied by positioning the bonding material adjacent the junctions of the outer surface of the header wall and the tubes; flowing the bonding material into said junctions, and allowing the bonding material to solidify and form a bond between the header wall and the tubes.

Fig. 1 is a front elevational view of a heat exchanger;

Fig. 2 is a sectional view taken along line 2—2 of Fig. 1, showing a header wall according to the prior art;

Fig. 3 is a partial sectional view, similar to Fig. 2, showing a header wall made in accordance with one embodiment of the instant invention;

Fig. 4 is a sectional view taken along line 4—4 of Fig. 3, showing the collared opening;

Fig. 5 is an end view of an oval tube with a rounded end;

Fig. 6 is a cross sectional view of an oval tube with a circular cross sectional end inserted within a collared opening in a header wall;

Fig. 7 is a cross sectional view, similar to Fig. 6 showing the bonding material in place;

Fig. 8 is a cross sectional view of an oval tube with a circular cross sectional end inserted within a collared circular opening in a header wall after welding and the placement of bonding material;

Fig. 9 is a cross sectional view of an oval tube with a circular cross sectional end within a collared circular opening in a header wall with solder foil positioned around the tube and adjacent the outer header wall, and heat transfer fins positioned on the tube; and

Fig. 10 is a cross sectional view, similar to Fig. 9 showing a ring of solder in place of the solder foil.

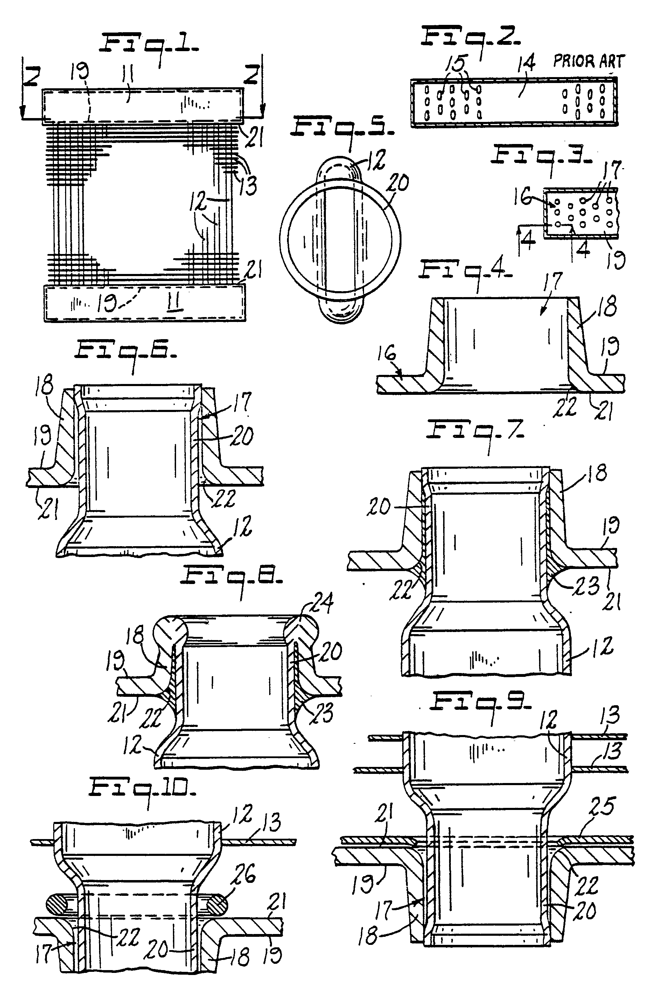

Referring to the drawings, Fig. 1 shows a heat exchanger such as an automotive radiator or the like with headers 11, tubes 12 and fins 13. In use the header contains a liquid coolant, and the header walls accordingly have an inner or liquid side and an outer or air side. The tubes are oval in cross sectional shape so as to minimize air drag and maximize heat transfer. Fig. 2 shows a view of the inner, liquid side, of a typical prior art header wall 14 with oval shaped collared openings 15. In accordance with the teachings of the prior art, the oval cross sectional shaped tubes, which are similar to tubes 12, except that they are oval along their entire length, have their oval cross sectional ends inserted into the oval shaped openings 15 and attached thereto by weld and/or solder or other bonding material. This creates a problem in that the fits formed between the oval cross section tube ends and the oval collared openings are not tight and are not amenable to a good weld or solder or other bond. A circular collared opening as is taught by the invention provides a tight fit and a surface match with the tubes which allows a more uniform and potentially hermetic weld. Also, the stress on the solder or other bonds are more evenly distributed, contributing to extended fatigue life.

Referring to Fig. 3, the header wall 16 is shown to comprise substantially circular collared openings 17. As is more clearly shown in Fig. 4, a collared opening 17 with collar 18 protrudes into the inner, liquid side 19, of the header. The collared opening 17 may be formed so that the collars extend in the opposite direction to those depicted in Fig. 4. The collar may be formed in various ways known in the art, such as punching a hole in the header wall and forming the collar with an appropriate die so that the collar is made from the material of the header wall and is integrally formed therewith.

As is more clearly shown in Fig. 5, the end 20 of the oval tube 12 is shaped into a substantially circular cross section corresponding to the cross section of the collared openings 17. While shaping end 20, care is taken that the outer diameter thereof have a smaller diameter than inner diameter of collared opening 17. Referring to Fig. 6, tube end 20 is inserted within collared opening 17 and is expanded at its outermost portion to form a tight fit with collar 18.

Thereafter as shown in Fig. 7, the tube 12 is bonded to the outer, air side, surface of the header wall 21 at the junction 22 of the tube and header wall. The bonding is performed by flowing bonding material 23 such as solder, or brazing material or a plastic structural adhesive such as epoxy, hot melt nylon or the like into the junction. The ends of the tubes 20 can also be bonded by welding the collar 18 to the tube end 20 as more clearly shown in Fig. 8 which shows the weld 24. According to the preferred embodiment of the invention the tubes 12 are first welded to the collars 18 and then a bonding material 23 is applied to the junction 22 of the tube and header wall 21. The welding should be performed first because the temperatures for welding are substantially higher than those for applying the bonding materials referred to above.

Referring to Fig. 9, soldering or brazing can be performed according to one embodiment of the invention, by first shaping the tube ends into substantially circular cross sections and then positioning a foil of solder or brazing material 25 about the ends of the tubes 20. The tube ends are then inserted into the collared openings and expanded. The assembly is positioned so that the foil is above the junction of the tubes and openings and thereafter the solder or brazing material is heated to flow into junction 22. This is accomplished by applying flux to the header (spray or immersion) and placing the entire header over a heat source of open flame, infra-red gas or electric heads, or focusing individually aimed burners aimed between individual tubes. Solder or brazing material can, as an alternative to foil, be in the form of rings 26 as is shown in Fig. 10.

The transfer fins 13 can be affixed at different stages of assembly, depending on the type of fins used. For example, if sheets of fins with openings for tubes are used they should be assembled onto the tubes prior to the tube ends being shaped into their circular cross sections. In Fig. 9, fins 13 are shown assembled on the tubes along with the solder foil 25, prior to melting of the solder. Some fins are attached by sliding them between the tubes after the tube and header assembly is completed.

While the description has focused on oval cross sectioned tubes, the tubes can be of any non-circular cross sectional shape. Thus, this method of assembling tubes and headers can be used regardless of the construction of the rest of the heat exchanger. For example, it may be desirable to construct a heat exchanger which does not utilize fins but relies on the shape of the tubes. This invention would work equally as well in any heat exchanger using headers and tubes.

## Claims

1. A method of affixing tubes of non-circular cross section (12) to a wall of a header (16) in a heat exchanger, wherein the wall (16) has a inner, liquid facing, side (19) and an outer air facing side (21), by forming a plurality of collars (18) in the header wall (16), each of said collars (18) having an opening of substantially circular cross section (17), each of said collars (18) projecting inwardly toward said liquid facing side (19); shaping the ends (20) of each of the tubes (12) into a substantially circular cross section; inserting each of said tube ends (20) into said collar openings (17) so that the end portions of each tube (20) and each collar (18) are substantially coplanar; and thereafter bonding the tubes (12) to the header (16), characterized in that said method comprises the further steps of:

a) shaping the circular tube ends (20) to an outer diameter smaller than the inner diameter of the collar opening (17);

b) after insertion, expanding the outer-most portion of said tube ends (20) to create a tight fit between the end of each collar opening (17) and the expanded portion of the respective tube end (20) while leaving an annular gap between the body of the collar (18) and the unexpanded remainder of the circular portion of said tube (20) within said collar (18);

c) welding said expanded tube end portions (20) to the ends of said collars (18); and

d) thereafter bonding the tubes (12) to the header (16) by flowing a bonding material (23) into said annular gaps between the tube (12) and the collar body (18).

2. The method of claim 1 wherein said bonding material (23) is selected from the group consisting of brazing rings, solder, solder rings, brazing foil, solder foil, and an adhesive.

3. The method of claim 1 wherein said step (d) of bonding the tubes (12) to the header (16) comprises the following operations:

i) positioning the bonding material (23) adjacent to the annular openings between the body of each collar (18) and the respective circular portion of said tube (20);

ii) heating said bonding material (23) so as to cause it to flow into said annular gaps; and

iii) allowing the bonding material (23) to solidify and form a columnar bond between the collar bodies (18) and the tubes (12).

## Patentansprüche

1. Verfahren zur Befestigung von Rohren mit anderem als rundem Querschnitt (12) an einer Wandung eines Sammelstücks (16) bei einem Wärmetauscher, bei welchem die Wandung (16) eine der Flüssigkeit zugekehrte Innenseite (19) und eine der Außenluft zugekehrte Außenseite (21) aufweist, durch Ausbildung einer Vielzahl von Manschetten (18) in der Wandung des Sammelstücks (16), wovon jede eine Öffnung von im wesentlichen rundem Querschnitt (17) aufweist und nach innen zu der der Flüssigkeit zugekehrten Innenseite (19) hin vorspringt; durch Ausformen der Enden (20) jedes der Rohre (12) zu einem im wesentlichen runden Querschnitt; durch Einsetzen jedes der Rohrenden (20) in die Öffnungen (17) der Manschetten, so daß die Endabschnitte aller Rohre (20) im wesentlichen in gleicher Ebene mit der jeweiligen Manschette (18) liegen, worauf die Rohre (12) mit dem Sammelstück (16) verbunden werden, dadurch gekennzeichnet, daß das Verfahren des weiteren die folgenden Schritte aufweist:

a) Anpassung der Form der runden Rohrenden (20) an einen Außendurchmesser, der kleiner als der Innendurchmesser der Öffnung (17) in der Manschette ist;

b) Aufweiten des äußersten Abschnitts der Rohrenden (20) nach dem Einsetzen, so daß eine dicht anschließende Passung zwischen dem Ende jeder Öffnung (17) in der Manschette und dem erweiterten Abschnitt des jeweiligen Rohrendes (20) entsteht, während zwischen dem Hauptteil der Manschette (18) und dem nicht aufgeweiteten übrigen Teil des runden Abschnitts des Rohres (20) in der Manschette (18) ein Ringspalt belassen wird;

c) Verschweißen der aufgeweiteten Rohrendabschnitte (20) mit den Enden der Manschetten (18), und

d) anschließendes Verbinden der Rohre (12) mit dem Sammelstück (16) durch Einfließenlassen eines Verbindungsmaterials (23) in die Ringspalte zwischen Rohr (12) und Hauptteil der Manschette (18).

2. Verfahren nach Anspruch 1, bei dem das Verbindungsmaterial (23) aus der Gruppe gewählt wird, in die Hartlotringe, Lötmittel, Lötmittelringe, Hartlotfolien, Lötmittelfolien und ein Klebstoffe fallen.

3. Verfahren nach Anspruch 1, bei dem der Arbeitsschritt (d) der Verbindung der Rohre (12) mit dem Sammelstück (16) die folgenden Einzelschritte umfaßt:

I) Anordnen des Verbindungsmaterials (23) in der richtigen Lage neben den runden Öffnungen zwischen dem Hauptteil jeder Manschette (18) und dem jeweiligen runden Abschnitt des Rohres (20);

II) Erwärmen des Verbindungsmaterials (23) in der Weise, daß es in die Ringspalte fließt, und

III) Verfestigenlassen des Verbindungsmaterials (23) unter Bildung einer säulenförmigen Verbindung zwischen dem jeweiligen Hauptteil der Manschette (18) und dem entsprechenden Rohr (12).

**Revendications**

1. Un procédé pour fixer des tubes (12) de section droite non-circulaire à une paroi (16) d'un collecteur d'un échangeur thermique, dans lequel la paroi (16) présente une face intérieure (19) tournée vers le liquide et une face extérieure (21) tournée vers l'air, ce procédé consistant à former une pluralité de collets (18) dans la paroi (16) du collecteur, chacun desdits collets (18) présentant une ouverture (17) de section droite sensiblement circulaire et chacun desdits collets (18) faisant saillie intérieurement vers ladite face (19) tournée vers le liquide; à conformer les extrémités (20) de chacun des tubes (12) suivant une section droite sensiblement circulaire; à introduire chacune desdites extrémités (20) des tubes dans lesdites ouvertures (17) à collet de manière que la partie extrême (20) de chaque tube et celle de chaque collet (18) soient sensiblement coplanaires; puis à lier les tubes (12) au collecteur, caractérisé en ce que ledit procédé comporte les étapes supplémentaires consistant à:

a) conformer les extrémités circulaires (20) des tubes à un diamètre extérieur inférieur au diamètre intérieur de l'ouverture (17) à collet;

b) après l'introduction, élargir la partie la plus extérieure desdites extrémités (20) des tubes pour créer une coopération serrée entre l'extrémité de chaque ouverture (17) à collet et la partie élargie de l'extrémité respective (20) de tube tout en ménageant un espace annulaire entre le corps du collet (18) et la partie restante non élargie de la partie circulaire dudit tube (12) dans ledit collet (18);

c) souder lesdites parties extrêmes élargies (20) des tubes sur les extrémités desdits collets (18); et

d) lier ensuite les tubes (12) au collecteur (11) en faisant s'écouler une matière de liaison (23) dans ledit espace annulaire entre le tube (12) et le corps de collet (18).

2. Le procédé de la revendication 1, dans lequel ladite matière de liaison (23) est choisie dans le groupe constitué par des bagues de brasage, de la soudure, des bagues de soudure, une feuille de brasage, une feuille de soudure et un adhésif.

3. Le procédé de la revendication 1, dans lequel ladite étape (d) de liaison des tubes (12) avec le collecteur (11) comporte les opérations suivantes:

i) placer la matière de liaison (23) en adjacence à l'espace annulaire entre le corps de chaque collet (18) et la partie circulaire (20) dudit tube;

ii) chauffer ladite matière de liaison (23) pour qu'elle soit amenée à s'écouler dans ledit espace annulaire; et

iii) laisser la matière de liaison (23) se solidifier et former un lien en colonne entre les corps de collet (18) et les tubes (12).

Fig.1.

Fig.2. PRIOR ART

Fig.5.

Fig.3.

Fig.4.

Fig.6.

Fig.7.

Fig.8.

Fig.9.

Fig.10.